# EUROPÄISCHE PATENTANMELDUNG

(11) **EP 2 717 399 A1**
(43) Veröffentlichungstag der Anmeldung: **09.04.2014**
(21) Anmeldenummer: 12006947.1
(22) Anmeldetag: 08.10.2012
(51) Int. Cl.: H02G 1/12, H01R 43/28, G01R 31/08

(54) **Verfahren zum Abisolieren eines Kabels**

(71) Anmelder: Komax Holding AG, 6036 Dierikon (CH)
(72) Erfinder: Viviroli, Stefan, 6048 Horw (CH); Müllers, Harald, 6042 Dietwil (CH); Zemp, Benno, 6274 Eschenbach (CH); Schnellmann, Chris, 5643 Sins (CH)
(74) Vertreter: Gort, Ralph

(57) **Zusammenfassung**

Bei einem Verfahren zum Abisolieren eines einen Leiter (2) umfassenden Kabels (3) wird eine Isolation (5) des sich in einer Längsrichtung (x) erstreckenden Kabels (3) mit Abisoliermessers (4, 4') angeschnitten, worauf die Isolation (5) durch Verschieben in Längsrichtung (x)der Abisoliermesser (4, 4') abgezogen wird, Während des Abziehvorgangs wird die Längsposition (x) der Abisoliermesser (4, 4') ermittelt, wenn mittels einer Detektiereinrichtung (6) festgestellt, dass wenigstens eines der Abisoliermesser (4, 4') den Leiter (2) berührt. Anhand der Längsposition (x) einer oder mehrerer Leiterberührungen kann dann eine Klassifizierung in gute und schlecht abisolierte Kabel vorgenommen werden.

## Beschreibung

Die Erfindung betrifft ein Verfahren zum Abisolieren eines Kabels, wobei das Verfahren besonders zum Bestimmen der Leiterqualität eines abisolierten Leiterendes eines Kabels geeignet ist. Weiterhin betrifft die Erfindung eine Vorrichtung zum Abisolieren eines Kabels, mit welcher dieses Verfahren durchführbar ist.

Vorrichtungen und Verfahren zum Abisolieren von elektrischen Kabeln sind seit längerer Zeit bekannt und gebräuchlich. Im Idealfall wird der metallische Leiter beim Abisolieren nicht verletzt. In der Praxis kann es jedoch vorkommen, dass Leiterenden beschädigt werden, wenn sie beim Abisolieren beispielsweise von den Abisoliermessern oder anderen Abisolierwerkzeugen berührt werden. Für die Qualitätsermittlung des Abisolierprozesses werden stichprobenartig abisolierte Leiterenden einer optischen Kontrolle mit einem Mikroskop unterzogen. Dieses erst nach Beendung des Abisolationsprozesses vorgenommene Prüfverfahren weist einige Nachteile auf. Das Verfahren ist recht aufwändig und zeitraubend, da die abisolierten Kabel erst nach der optischen Prüfung freigegeben werden können. Eine allenfalls nötige Nachjustierung der Einschneidetiefe und des so genannten "Wayback" (d. h. einer Rückstellbewegung, bei der die Messer nach dem Anschneiden wieder leicht rückgesetzt bzw. geöffnet werden) ist nicht effizient möglich, weshalb vergleichsweise viel Ausschuss an "schlecht abisolierten" Kabeln entstehen kann.

Es ist deshalb eine Aufgabe der vorliegenden Erfindung, ein Verfahren zum Abisolieren von Kabeln zu schaffen, mit dem die Leiterqualität der abisolierten Leiterenden der Kabel einfach und effizient bestimmt werden kann.

Erfindungsgemäss wird diese Aufgabe mit dem Verfahren mit den Merkmalen des Anspruchs 1 gelöst. Nach Bereitstellung eines sich in Längsrichtung erstreckenden Kabels, das aus einem elektrischen Leiter (Draht oder Litze) und einer den Leiter umgebenden Isolation (Isolierhülle) besteht, wird zunächst die Isolation mit wenigstens einem Abisoliermesser angeschnitten. Danach wird die angeschnittene Isolation durch Verschieben des wenigstens einen Abisoliermessers in Längsrichtung abgezogen. Während dieses Abziehvorgangs wird die Längsposition des wenigstens einen Abisoliermessers ermittelt, wenn mittels einer Detektiereinrichtung festgestellt wird, dass das wenigstens eine Abisoliermesser den Leiter berührt. Die Längsposition des Abisoliermessers lässt sich beispielsweise mit einem optischen, elektromagnetischen oder mechanischem Positivionserfassungssystem oder Trackingsystem einfach ermitteln. Das abzuisolierende Kabel wird vorzugsweise mittels einem Greifer, einer Klemmeinrichtung oder anderen Mitteln fixiert, so dass beim Einschneiden und Abziehen das Kabel still steht und keine unerwünschte Bewegung des gesamten Kabels möglich ist. Da zu jedem Zeitpunkt des Abisolierprozesses eine Berührung des Leiters durch das Abisoliermesser festgestellt und die entsprechende, der Leiterberührung zugeordnete Lage des Abisoliermesseres ermittelt wird, ist eine optimale Qualitätsbestimmung des Abisolierprozesses gewährleistet. Die Leiterqualität von abisolierten Leiterenden kann einfach automatisiert werden und lässt sich bei jeder Abisolierung zuverlässig bestimmen.

Beim Anschneiden der Isolation wird das wenigstens eine Abisoliermesser vorzugsweise in radialer Richtung gegen den Leiter bewegt. Für die Abisolierung ist die Verwendung eines einzigen Abisoliermessers ausreichend. Bevorzugt wird jedoch ein Messerpaar mit zwei gegeneinander zwischen einer Offen- und einer Schliessstellung bewegbaren Abisoliermessern verwendet. Weiterhin ist es denkbar, dass nach dem Anschneiden der Isolation das wenigstens eine Abisoliermesser eine geringfügige Rückbewegung in radialer Richtung vom Leiter weg ("Wayback") vollzieht, noch vor dem Abzieh-Vorgang. Für die radiale Bewegung (Anschneiden und gegebenenfalls Rückbewegung/Wayback) und für die Bewegung in Längsrichtung (Abziehen) des wenigstens einen Isoliermessers können jeweils separate Antriebe verwendet werden.

In einer ersten Ausführungsform können die Leiterberührungen des Abisoliermessers auf einer Bildschirmoberfläche einer Anzeigeeinrichtung dargestellt werden. Aus einer derartigen Darstellung ist einfach entnehmbar, zu welchem Zeitpunkt bzw. in welcher Lage wenigstens in Bezug auf die Längsrichtung eine Berührung des Abisoliermessers mit dem Leiter stattgefunden hat. Anstatt einer grafischen Darstellung könnten die Leiterberührungen auch in Tabellenform ausgegeben und dargestellt werden. Die Anzeigeeinrichtung kann beispielsweise ein auf einer Bildröhre basierender Bildschirm, ein LCD- oder ein LED-Bildschirm sein, der zum Beispiel an einen PC oder Laptop angeschlossen ist. Als Anzeigeeinrichtung können auch Ausgabemittel einer schon bestehenden Maschinensteuerung verwendet werden.

Besonders vorteilhaft ist es, wenn das abzuisolierende Kabel als virtuelles Model auf der Bildschirmoberfläche darstellbar ist, wobei die jeweiligen Leiterberührungen auf einem virtuellen abisolierten Leiterende des Models grafisch dargestellt werden. Da aus einer solchen grafischen Darstellung die Leiterqualität des abisolierten Leiterendes für das Bedienpersonal besonders gut erkennbar ist, können die Verfahrensparameter für den Abisolierprozess (insbesondere Einschneidetiefe, Wayback) für eine Nachjustierung einfach optimiert werden. Die Bedienungsführung wird auf diese Weise erheblich erleichtert und mögliche Fehlerquellen reduziert. Es ist auch vorstellbar, die Nachjustierung zu automatisieren, wozu eine auf einem Computer geladene Bildverarbeitungs- und/oder Analysesoftware eingesetzt werden kann.

Weiterhin kann es vorteilhaft sein, wenn die Längsausdehnung mittels der Detektiereinrichtung und dem Positionserfassungssystem in Bezug auf die Längsrichtung jeder Leiterberührung ermittelt werden kann. Die Längsausdehnung der Leiterberührung kann als Mass für den Schweregrad der durch die Leiterberührung verursachten Schadstelle auf dem Leiter herangezogen werden.

Anhand der Längsposition einer oder mehrerer Leiterberührungen kann eine Klassifizierung in gut abisolierte und schlecht abisolierte Kabel vorgenommen werden. Alternativ oder zusätzlich kann anhand der Längsposition einer oder mehrerer Leiterberührungen eine Justierung der Einschneidetiefe und gegebenenfalls des Wayback des wenigstens einen Abisoliermessers vorgenommen werden. Auf diese Weise lässt sich das Leiterqualitätsbestimmungs-Verfahren in idealer Weise in einen Gesamtprozess zum Konfektionieren von Kabeln integriert werden.

Eine einfache Klassifizierung in gut und schlecht ist erreichbar, wenn die ermittelte Längsposition einer erstmaligen Berührung mit einem vorbestimmten Stellwert verglichen wird, so dass bei Unterschreiten des Schwellwertes ein schlecht abisoliertes Kabel erkennbar ist. Es wird dabei angenommen, dass nach Überschreiten des Schwellwertes allfällige Leiterberührungen unproblematisch sind und folglich als "gut" klassifiziert werden können, Der Schwellwert kann für gängige Kabel und Konfektionierungsanforderungen wenigstens in Bezug auf die Abzieh-Richtung jenseits der Mitte des abzuisolierenden Leiterendes liegen.

Ein weiterer Aspekt der Erfindung betrifft eine Vorrichtung zum Abisolieren eines Kabels gemäss dem vorgängig beschriebenen Verfahren. Die Vorrichtung kann wenigstens ein Abisoliermesser Antriebe zum Bewegen des jeweiligen Abisoliermessers in radialer Richtung und in Längsrichtung eine Detektiereinrichtung zum Feststellen von Leiterberührungen und ein Positionserfassungssystem zum Erfassen wenigstens der Längsposition des jeweiligen Abisoliermessers aufweisen. Die Detektiereinrichtung und das Positionserfassungssystem können elektronisch mit einem Computer oder einer anderen Datenverarbeitungseinheit verbunden sein, mit der in Abhängigkeit der Leiterberührungen die jeweiligen Längspositionen der Messer ermittelt werden können.

Ein weiterer Aspekt betrifft sodann ein Computerprogramm, das, wenn es in einen Computer geladen ist oder auf einem Computer läuft, das vorgängig beschriebene Verfahren ausführt. Dieses Computerprogramm kann Bestandteil der Software für die Maschinensteuerung zum Betreiben der Abisolier-Vorrichtung sein. Das Computerprogramm könnte auch als separates Computerprogramm-Produkt bereitgestellt werden oder erhältlich sein. Unter einem Computer wird eine elektronische Datenverarbeitungs-Einrichtung verstanden, die Daten nach einer Rechenvorschrift verarbeiten kann. Ein solcher Computer kann der Rechner die schon bestehende oder um- oder aufgerüstete Maschinensteuerung zum Betreiben der Abisolier-Vorrichtung sein. Ein Computer kann auch ein PC oder sogar ein portables Gerät (z.B. Laptop) sein.

Weitere Einzelmerkmale und Vorteile der Erfindung ergeben sich aus der nachstehenden Beschreibung eines Ausführungsbeispiels und aus den Zeichnungen. Es zeigen:
- Fig. 1;: eine schematische Darstellung einer Vorrichtung zum Durchführen des erfindungsgemässen Verfahrens zum Abisolieren eines Kabels, und
- Fig. 2;: eine Seitenansicht eines abisolierten Leiterendes mit beispielhaft dargestellten Leiterberührungen.

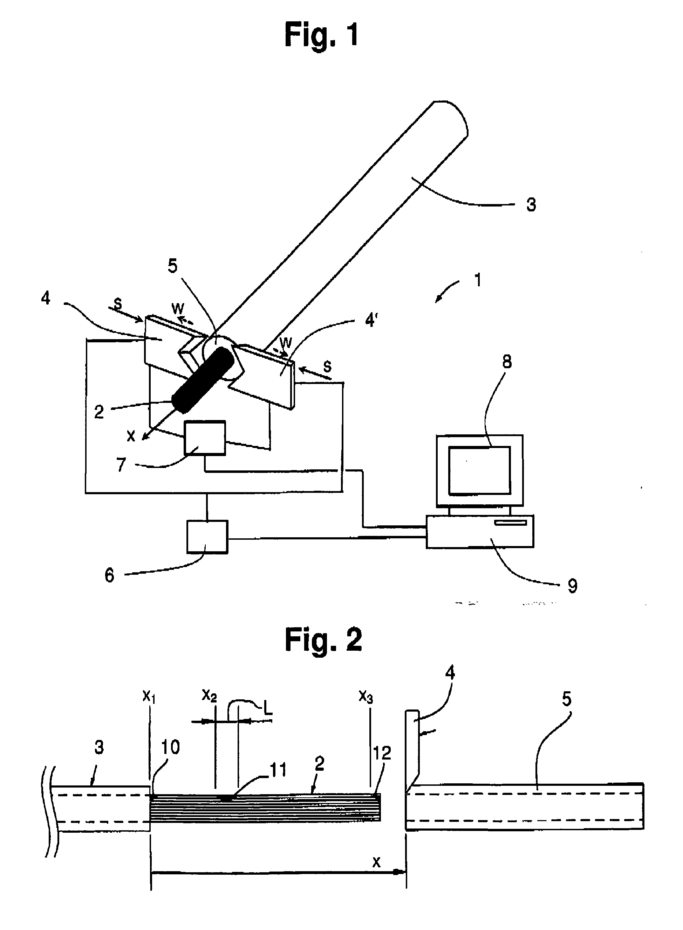

Die in Figur 1 insgesamt mit 1 bezeichnete Vorrichtung zum Abisolieren eines elektrischen Kabels 3 umfasst ein Messerpaar mit zwei gegeneinander bewegbaren Abisoliermessern 4 und 4'. Zum Anschneiden der Isolation sind die Messer in radialer Richtung gegen den Leiter 2 des Kabels 3 bewegbar. Diese Schliessbewegung ist mit Pfeilen s angedeutet. Di mit w bezeichneten, gestrichelten Pfeile für die Gegenrichtung deuten eine allfällige Rückstellbewegung (Wayback) der Messer Abisoliermesser 4, 4' an. Nach dem Anschneiden der Isolation werden die beiden Abisoliermesser 4,4' gemeinsam mit einem nicht dargestellten Antrieb in x-Richtung zum Abziehen der angeschnittenen Isolation verschoben. Die Lage der Abisoliermesser 4,4' kann mit einem mit 7 bezeichneten Positionserfassungssystem erfasst werden. Mit einer Detektiereinrichtung 6 lässt sich feststellen, ob die Abisoliermesser 4, 4' den Leiter 2 berühren. Das Positionserfassungssystem 7 und die Detektiereinrichtung 6 sind mit einer Datenverarbeitungs-Einheit 9 verbunden, mit deren Hilfe die jeweilige Längsposition x des Abisoliermessers ermittelt werden kann, wenn eine Leiterberührung festgestellt wird. Die Leiterberührungen der Abisoliermesser können dann auf einer Bildschirmoberfläche einer Anzeigeeinrichtung 8 dargestellt werden. Das Verfahren eignet sich für jegliche Arten von Kabeln, die aus einem elektrischen Leiter (z.B. Draht oder Litze aus Kupfer) und einer den Leiter umgebenden hülsenförmigen Isolation besteht.

Die Abisoliermesser 4, 4' gemäss dem vorliegenden Ausführungsbeispeispiel verfügen jeweils über eine V-förmige Schneidgeometrie. Selbstverständlich könnten die Abisoliermesser auch gerade Schneiden bzw. Schneidkanten oder andere Schneidgeometrie (z.B. mit Krümmung) aufweisen.

Figur 2 zeigt ein abisoliertes bzw. nacktes Leiterende des Leiters 2 des Kabels 3; die durch die Abisolation entfernte hülsenförmige Isolation 5 und das in Bezug auf die Längsrichtung momentan in der Position "x" befindliche Abisoliermesser 5 sind ebenfalls erkennbar. Im vorliegend gezeigten Ausführungsbeispiel wurde der Leiter 2 beim Abisolieren durch Leiterberührungen beschädigt. Die drei Schadstellen sind mit 10, 11 und 12 andeutungsweise dargestellt. Die erste Schadstelle bzw. Leiterberührung befindet sich unmittelbar an der Anschneidestelle x₁ (x = 0), die zweite Schadstelle bzw. Leiterberührung befindet sich in der Längsposition x₂ und weist eine mit L bezeichnete Längsausdehnung auf, die dritte Schadstelle 12 befindet sich im Bereich des freien Endes des Leiters 3 in der Längsposition x₃. Während dem Abziehvorgang, bei dem das Abisoliermesser 4 in x-Richtung verschoben wird, werden Leiterberührungen detektiert und bei Leiterdetektion die entsprechende Längsposition x mit der in Figur 1 dargestellten Vorrichtung erfasst. Details für eine mögliche Ausgestaltung einer Detektiereinrichtung für die Vorrichtung zum Abisolieren des Kabels, mit der die Leiterqualität des abisolierten bestimmbar ist, sind aus Figur 3 entnehmbar.

Das Verfahren zum Abisolieren des Kabels 3 umfasst folgende Schritten: Zunächst wird die Isolation des sich in einer Längsrichtung erstreckenden Kabels 3 mit dem Abisoliermesser 4 angeschnitten, das Abisoliermesser wird dabei in radialer Richtung gegen das Kabel bewegt. Dann wird gegebenfalls durch eine Bewegung in Gegenrichtung (d.h. in Richtung der Offenstellung) das Abisoliermesser geringfügig zurückgezogen (Wayback). Nach dem Anschneiden wird durch Verschieben in Längsrichtung des Abisoliermessers 4 die angeschnittene Isolation abgezogen. Während des Abziehvorgangs wird mittels der (hier nicht dargestellten) Detektiereinrichtung festgestellt, ob das Abisoliermesser 4 den Leiter 2 berührt. Bei jeder Leiterberührung wird die Längsposition (x) des einen Abisoliermessers 4 ermittelt. Die auf diese Weise gewonnenen Daten können auf einer Bildschirmoberfläche dargestellt werden. Die Darstellung auf der Bildschirmoberfläche kann etwa wie diejenige aus Fig. 2 aussehen. Das abisoliererte Kabel 3 ist als virtuelles Modell vereinfacht in der gezeigten beispielhaften Form auf dem Bildschirm darstellbar. Die jeweiligen Leiterberührungen 10, 11, 12 werden auf dem virtuellen abisolierten Leiterende grafisch dargestellt.

Anhand der Längspositionen x und vorzugsweise unter Berücksichtigung der Längsausdehnungen der Leiterberührungen lasst sich eine Klassifizierung in gute und schlecht abisolierte Kabel vornehmen. Anhand dieser Informationen kann ebenfalls eine Justierung der Einschneidetiefe des Abisoliermessers 4 vorgenommen werden. Zum Klassifizieren wird die ermittelte Längsposition einer erstmaligen Berührung mit einem vorbestimmten Schwellwert verglichen wird, so dass bei Unterschreiten des Schwellwerts ein schlecht abisoliertes Kabel erkennbar ist. Wenn AL die Länge des abisolierte Endes des Kabels ist, dann könnte der Schwellwert beispielsweise bei 0.9 AL liegen. Der Schwellwert liegt für gängige Kabel und Konfektionierungsanforderungen wenigstens jenseits der Mitte des abzuisolierenden Leiterendes (d.h. Schwellwert > 0.5 AL). Abisolierte Kabel, bei denen Leiterberührungen in der ersten Hälfte des Abziehvorgangs auftraten, werden also als "schlecht" klassifiziert.

Mit einer Darstellung in der Art von Fig. 2 erhält der Maschinenbediener zum Einstellen der Kabelverwbeitungsmaschine eine wertvolle Unterstützung, wie die optimalen Werte für die Einschneidtiefe und den Wayback zu finden sind.

Zum Detektieren der Leiterberührungen kann zum Beispiel eine mit einem kapazitiven Sensor ausgerüstete Detektiereinrichtung 6 verwendet werden. Der Sensor ist mit dem oder den Abisoliermessern 4, 4' verbunden und derart ausgebildet, dass eine Berührung des leitfähigen Messers mit dem Leiter des Kabels anhand einer Kapazitätserhöhung detektiert werden kann, wobei die Kapazität umgekehrt proportional zur Spannung ist. Aus der DE 10 2007 053 825 A1 ist eine Abisoliervorrichtung bekannt geworden, bei der mittels eines kapazitiven Sensors festgestellt werden kann, ob eine Leiterberührung stattgefunden hat. Die dort gezeigte Detektiereinrichtung könnte grundsätzlich nach entsprechender Anpassung auch zur Durchführen des erfindungsgemässen Verfahrens benutzt werden. Selbstverständlich wären aber auch andere Detektiereinrichtungen und - verfahren zum Durchführen des vorgängig beschriebenen Verfahrens zum Bestimmen der Leiterqualität eines abisolierten Leiterendes eines Kabels denkbar.

## Patentansprüche

1. Verfahren zum Abisolieren eines einen Leiter (2) umfassenden Kabels (3) und insbesondere zum Bestimmen der Leiterqualität eines abisolierten Leiterendes eines Kabels (3) mit folgenden Schritten:
a) Anschneiden einer Isolation (5) des sich in einer Längsrichtung (x) erstreckenden Kabels (3) mit wenigstens einem Abisoliermesser (4, 4'),
b) Abziehen der angeschnittenen Isolation (5) durch Verschieben des wenigstens einen Abisoliermessers (4, 4') in Längsrichtung (x), und
c) Ermitteln der Längsposition (x) des wenigstens einen Abisoliermessers (4, 4') während des Abziehvorgangs, wenn mittels einer Detektiereinrichtung (6) festgestellt wird, dass das wenigstens eine Abisoliermesser (4, 4') den Leiter (2) berührt.

2. Verfahren nach Anspruch 1, **dadurch gekennzeichnet, dass** Leiterberührungen (10, 11, 12) des Abisoliermessers (4, 4') auf einer Bildschirmoberfläche dargestellt werden.

3. Verfahren nach Anspruch 2, **dadurch gekennzeichnet, dass** das abzuisolierende Kabel (3) als virtuelles Modell auf der Bildschirmoberfläche darstellbar ist, wobei die jeweiligen Leiterberührungen (10, 11, 12) auf einem virtuellen abisolierten Leiterende grafisch dargestellt werden.

4. Verfahren nach einem der Ansprüche 1 bis 3, **dadurch gekennzeichnet, dass** eine Längsausdehnung (L) in Bezug auf die Längsrichtung (x) jeder Leiterberührung ermittelt werden.

5. Verfahren nach einem der Ansprüche 1 bis 4, **dadurch gekennzeichnet, dass** anhand der Längsposition (x) einer oder mehrerer Leiterberührungen (10, 11, 12) eine Klassifizierung in gute und schlecht abisolierte Kabel und/oder dass anhand der Längsposition (x) einer oder mehrerer Leiterberührungen eine Justierung der Einschneidetiefe des wenigstens einen Abisoliermessers (4, 4') vorgenommen wird.

6. Verfahren nach einem der Ansprüche 1 bis 5, **dadurch gekennzeichnet, dass** die ermittelte Längsposition (x) einer erstmaligen Berührung mit einem vorbestimmten Schwellwert verglichen wird, so dass bei Unterschreiten des Schwellwerts ein schlecht abisoliertes Kabel erkennbar ist.

7. Computerprogramm, welches, wenn es in einen Computer (9) geladen ist oder auf einem Computer (9) läuft, ein Verfahren nach einem der vorhergehenden Ansprüche ausführt.

8. Computerprogrammprodukt mit dem Computerprogramm nach Anspruch 7.

9. Vorrichtung (1) zum Durchführen des Verfahrens nach einem der Ansprüche 1 bis 6.
